# EUROPEAN PATENT APPLICATION

(11) **EP 4 636 106 A1**
(43) Date of publication of application: **22.10.2025**
(21) Application number: 24187973.3
(22) Date of filing: 11.07.2024
(51) Int. Cl.: C22C 1/02, C22C 1/03, C22C 21/10, C22F 1/00, C22F 1/053

(54) **ALUMINUM ZINC ALLOY MATERIALS FOR CASTING, PREPARATION METHOD FOR COMPONENTS AND APPLICATION THEREOF**

(30) Priority: 17.04.2024 CN 202410458439
(71) Applicant: Citic Dicastal Co., Ltd., Quinhuangdao Heibei 066011 (CN)
(72) Inventor: LIU, Haifeng, Qinhuangdao City (CN); WANG, Wei, Qinhuangdao City (CN); CHEN, He, Qinhuangdao City (CN); WANG, Lisheng, Qinhuangdao City (CN); ZHANG, Zhendong, Qinhuangdao City (CN); YANG, Liguo, Qinhuangdao City (CN); JIA, Jianlei, Qinhuangdao City (CN); MA, Chao, Qinhuangdao City (CN); QIAO, Haibo, Qinhuangdao City (CN); HE, Yanming, Qinhuangdao City (CN); CAO, Jianqiang, Qinhuangdao City (CN); ZHANG, Hongren, Qinhuangdao City (CN); QIU, Zheng, Qinhuangdao City (CN); LIU, Shuji, Qinhuangdao City (CN); TONG, Ruisong, Qinhuangdao City (CN); HU, Jianhua, Qinhuangdao City (CN)
(74) Representative: Chung, Hoi Kan

(57) **Abstract**

The present disclosure provides an aluminum zinc alloy material for casting, a preparation method for a component and an application thereof. An aluminum zinc alloy material for casting, by percentage of weight, including: Zn: 5.0% ~ 7.0%, Mg: 1.0% ~ 3.0%, Fe: 0.20% ~ 0.40%, Ni: 0.25% ~ 0.50%, Si: 0.10% ~ 0.30%, Cu: 0.05% ~ 0.15%, the balance of Al, where the weight ratio of Zn element to Mg element is more than 2.3. The required strength and toughness can be obtained through reasonable adjustment of the ratio between different elements. The main elements Zn and Mg form a MgZn2 strengthening phase in the matrix to improve the strength of the alloy. Ni and Fe elements should be added on the basis of Zn and Mg elements, and the strictly controlling of the content of Si elements can reduce the influence of Fe elements on the toughness.

## Description

### TECHNICAL FIELD

The present disclosure relates to the field of aluminum alloy, in particular to an aluminum zinc alloy material for casting, a preparation method of a component and an application thereof.

### BACKGROUND

At present, the strict control of carbon dioxide and other pollutants emissions has raised the requirements for energy saving and emission reduction of automobiles. Automotive lightweight design has always been recognized as the most effective and feasible way to save energy and reduce emissions. It is estimated that when the weight of the automobile drops by 10%, the energy consumption decreases by 5-10%, and the automobile chassis parts belong to the unsprung mass, the weight reduction effect of the unsprung mass is much greater than that of the sprung mass, therefore the lightweight degree of the automobile chassis parts has great significance to energy saving and emission reduction. At the same time, abundant energy is consumed in the production and processing of automotive chassis parts, such as the preparation of raw materials and heat treatment processes. As a result, improving the proportion of recycled materials and optimizing the relevant process can effectively reduce the carbon emissions and can achieve energy conservation and pollution reduction.

At this stage, aluminum(Al)-silicon(Si) alloy is widely used in automotive chassis parts to achieve their own weight reduction, the alloy generally has excellent fluidity, good corrosion resistance and cutting performance, and usually requires T6 or T7 heat treatment to obtain relatively excellent mechanical properties to meet the requirements of the product, but for large energy consumption of the heat treatment process, deformation and surface bubbles and other problems, leading to an increase of scrap rate. Moreover, the toughness of aluminum-silicon alloy is quite sensitive to ferrum (Fe) content, if repeated recycling and remelting, the Fe content in the alloy increases, resulting in a decrease in elongation of the product.

### SUMMARY

The purpose of the present disclosure is to provide an aluminum zinc alloy material for casting, a preparation method of a component and application thereof, in order to solve the technical problem that the aluminum-silicon alloy is quite sensitive to Fe content.

To realize the above purpose, the present disclosure provides an aluminum zinc alloy material for casting, by percentage of weight, including:
Zn: 5.0% ~ 7.0%, Mg: 1.0% ~ 3.0%, Fe: 0.20% ~ 0.40%, Ni: 0.25% ~ 0.50%, Si: 0.10% ~ 0.30%, Cu: 0.05% ~ 0.15%, the balance of Al; where, the weight ratio of Zn element to Mg element is more than 2.3.

In some embodiments, the aluminum zinc alloy materials by percentage of weight further including:
Zn: 5.0% ~ 6.0%, Mg: 1.8% ~ 2.2%, Fe: 0.30% ~ 0.40%, Ni: 0.35% ~ 0.50%, Si: 0.10% ~ 0.30%, Cu: 0.10% ~ 0.15%, the balance of Al.

In some embodiments, the aluminum zinc alloy materials by percentage of weight further including:
Zn: 5.0% ~ 6.0%, Mg: 1.8% ~ 2.2%, Fe: 0.20% ~ 0.30%, Ni: 0.25% ~ 0.35%, Si: 0.10% ~ 0.30%, Cu: 0.10% ~ 0.15%, the balance of Al.

In some embodiments, the weight ratio of Ni element to Fe element is between 1 and 1.5.

In some embodiments, the microstructure of the aluminum zinc alloy material for casting is mainly composed of α -Al matrix, MgZn2 phase and AlFe9Ni eutectic phase; the aluminum zinc alloy material for casting has a tensile strength more than 270MPa, a yield strength more than 175MPa, and a elongation more than 11%.

The present disclosure further provides a preparation method for an aluminum zinc alloy component, including:
Melting above raw material corresponding to the aluminum zinc alloy material for casting to obtain melt;
Adding AlTiB refiner into the melt and keeping warm for 5 minutes; the addition quantity of the AlTiB refiner being 0.2% of the total weight of the melt;
Adding a refining agent of 0.2% of the total weight of the melt into the melt, and adding purity argon gas for degassing refining; a degassing time being 10 minutes to 15 minutes;
Casting refined melt at 690 °C to 700 °C to obtain the aluminum zinc alloy component.

In some embodiments, the step "melting above raw material corresponding to the aluminum zinc alloy material for casting to obtain melt" includes:
Melting pure aluminum and heating the pure aluminum to 740°C to 760°C to keep warm; adding pure silicon in proportion and keeping warm for 10 minutes; adding Al-20%Zn, Al-20%Fe, Al-10%Ni and Al-50%Cu in proportion and keeping warm for 10 minutes to 20 minutes; stirring during keeping warm period; cooling liquid metal to 710°C to 720 °C after the raw material being melted; adding pure magnesium to obtain a melt; and adding a covering agent on a surface of the melt.

In some embodiments, the method further includes:
Solution treating the component obtained by casting with primary solution and secondary solution successively; a primary solution temperature being 380°C to 440°C and a primary solution time being 1 hour to 4 hours; a secondary solution temperature being 500°C to 540°C and a secondary solution time being 4 hours to 7 hours;
Quenching treating the component after the secondary solution treatment in the quenching medium; a quenching medium being water, a temperature of the quenching medium being 60°C to 80°C; a quenching transferring time being not more than 30 seconds, and a quenching time being 100 seconds to 150 seconds;
Aging treating the quenched component, to obtain the aluminum zinc alloy component.

In some embodiments, the step "aging treating the quenched component" includes:
Placing the quenched component at 150°C to 180 °C for 2 hours to 6 hours.

The present disclosure further provides an application of the above aluminum zinc alloy material for casting or the aluminum zinc alloy component prepared by the above method on an automobile chassis part.

In the above-mentioned aluminum zinc(Zn) alloy materials for casting, the required strength and toughness can be obtained through reasonable adjustment of the ratio between different elements. Among them, the main elements of alloy are zinc(Zn) and magnesium(Mg), which forms MgZn₂ strengthening phase in the matrix to improve the alloy strength. Nickel(Ni) and ferrum(Fe) elements are added on the basis of Zn and Mg elements, and the content of Si elements is strictly controlled to reduce the influence of Fe elements on the toughness of the material. Moreover, Fe is an alloying element in the aluminum zinc alloy material for casting, and has a wide composition control range in present disclosure, which can significantly improve the proportion of recycled aluminum used in the product manufacturing process.

### BRIEF DESCRIPTION OF DRAWINGS

In order to more clearly illustrate the technical solutions of the embodiments of the present disclosure, the drawings used for illustrating the embodiments will be briefly described below. It should be understood that the following drawings merely illustrate some embodiments of the present disclosure and therefore should not be regarded as a limitation of the scope. For those of ordinary skill in the art, other drawings can be obtained according to these drawings without any creative work.
FIG. 1 shows the Scanning Electron Microscopy (SEM) topography of the aluminum-silicon alloy described in example 1 of the present disclosure.
FIG. 2 shows the SEM topography of the aluminum-silicon alloy described in example 2 of the present disclosure.
FIG. 3 shows the SEM topography of the aluminum-silicon alloy described in comparative example 1 of the present disclosure.

The realization of the purpose, functional characteristics and advantages of the present disclosure will be further explained in combination with the embodiments and with reference to the attached drawings.

### DETAILED DESCRIPTION OF THE EMBODIMENTS

The following is a clear and complete description of the technical scheme in the embodiments of the present disclosure in combination with the drawings attached to the embodiments of the present disclosure. Obviously, the embodiments described are only part of the embodiments of the present disclosure, not all embodiments. Based on the embodiments of the present disclosure, all other embodiments obtained by ordinary technicians in the field without making creative labor fall within the scope of protection of the present disclosure.

It should be noted that all directional indications (such as up, down...) in the embodiments of the present disclosure is only used to explain the relative position relationship and motion between the components in a specific attitude (as shown in the attached figure). If the specific attitude changes, the directional indication will also change accordingly.

In addition, descriptions in the present disclosure that refer to "first", "second", etc., are used for descriptive purposes only and are not to be understood as indicating or implying their relative importance or as implicitly indicating the quantity of the technical features indicated. Thus, a feature defined as "first" or "second" may explicitly or implicitly include at least one of the features.

Moreover, the technical schemes between embodiments of the invention can be combined with each other, but must be based on the realization of ordinary technical personnel in the field, and when the combination of technical schemes is contradictory or impossible to realize, it shall be considered that the combination of such technical schemes does not exist and is not within the scope of protection required by the present disclosure.

The present disclosure provides an aluminum zinc alloy material for casting, which is calculated by percentage of weight, including:
Zinc(Zn): 5.0% ~ 7.0%, Mg: 1.0% ~ 3.0%, Fe: 0.20% ~ 0.40%, Ni: 0.25% ~ 0.50%, Si: 0.10% ~ 0.30%, copper(Cu): 0.05% ~ 0.15% and the balance of Al; Among them, the weight ratio of Zn element to Mg element is more than 2.3.

The main elements of the aluminum zinc alloy in the present disclosure are Zn and Mg, and the required strength and toughness can be obtained through reasonably adjusting of the ratio of different elements, especially the proportion of Fe and Ni. The role of each element is briefly explained below.

Zn and Mg elements are the main strengthening elements of aluminum zinc alloy. If Zn or Mg elements are added separately, the raising of the strength of the alloy is very limited, but if they are added at the same time, MgZn₂ strengthening phase can be formed in the matrix to improve the strength of the alloy. The Zn/Mg ratio has a great influence on the phase composition in the alloy. When the Zn/Mg ratio is more than 2.3, the phase composition in the alloy is: α (Al), T(Al₂Mg₃Zn₃) eutectic phase and η (MgZn₂) phase, when the Zn/Mg ratio is less than 2.3, the phase composition in the alloy is α (Al) and T(Al₂Mg₃Zn₃) eutectic phase, and generally without η (MgZn₂) phase.

Under normal circumstances, Fe element exists as a harmful impurity element in aluminum alloy, however adding the Ni and Fe elements at the same time based on the addition of Zn and Mg elements, and controlling the weight ratio of the Ni element to the Fe element between 1-1.5, the AlFe₉Ni eutectic phase can be formed in the matrix to improve the strength of the alloy.

A small amount of Cu element is added into the alloy to form Al₂CuMg phase to strengthen the alloy in some degree. In addition, Cu can reduce the potential difference between grain boundary and grain, refine grain boundary precipitation phase, inhibit the trend of intergranular cracking, and improve the stress corrosion resistance of the alloy.

In addition, a small amount of Si element added in the alloy forms Mg₂Si phase to play a role in auxiliary strengthening, but the content of Si can not exceed 0.30%, otherwise a coarse AlFeSi brittle phase will be formed in the alloy to decrease the plasticity and fracture toughness of the alloy.

In the above-mentioned aluminum zinc alloy materials for casting, the required strength and toughness can be obtained through reasonable adjustment of the ratio between different elements. Among them, the main elements of alloy are Zn and Mg, which form MgZn₂ strengthening phase in the matrix to improve the alloy strength with the addition of Ni and Fe elements on the basis of Zn and Mg elements, and the strictly controlling of the content of Si elements can effectively reduce the influence of Fe elements on the toughness of the material.

In a related technology, Fe is a harmful element in A356 alloys, and the lower content is the better. However, in the above-mentioned aluminum zinc alloy materials for casting, Fe exists as an alloying element, and has a wide composition control range in present disclosure, which can significantly improve the proportion of recycled aluminum used in the product manufacturing process.

In some embodiments, by percentage of weight, the aluminum zinc alloy material for casting includes:
Zn: 5.0% ~ 6.0%, Mg: 1.8% ~ 2.2%, Fe: 0.30% ~ 0.40%, Ni: 0.35% ~ 0.50%, Si: 0.10% ~ 0.30%, Cu: 0.10% ~ 0.15%, the balance of Al.

In some embodiments, by percentage of weight, the aluminum zinc alloy material for casting includes:
Zn: 5.0% ~ 6.0%, Mg: 1.8% ~ 2.2%, Fe: 0.20% ~ 0.30%, Ni: 0.25% ~ 0.35%, Si: 0.10% ~ 0.30%, Cu: 0.10% ~ 0.15%, the balance of Al.

In some embodiments, the weight ratio of the Ni element to the Fe element is between 1 to 1.5. When the weight ratio of the Ni element to the Fe element falls in the range, the AlFe₉Ni eutectic phase is formed in the matrix, which can improve the strength of the alloy.

In some embodiments, in the aluminum zinc alloy materials for casting, the common impurity elements mainly include calcium(Ca), phosphorus(P), antimony (Sb), etc., and the weight percentage of the total impurity elements is not more than 0.10%.

In some embodiments, the microstructure of the aluminum zinc alloy material for casting is mainly composed of α -Al matrix, MgZn₂ phase and AlFe₉Ni eutectic phase; The aluminum zinc alloy material for casting has a tensile strength more than 270MPa, a yield strength more than 175MPa, and a elongation more than 11%.

The present disclosure also provides a method for preparing an aluminum zinc alloy component, including the following steps:
S100: The raw material corresponding to the above aluminum zinc alloy material for casting is melted to obtain melt.

The raw material corresponding to the aluminum zinc alloy material is the original material for producing aluminum zinc alloy material, in other words, the composition of all elements in the raw material is consistent with the composition of the aluminum zinc alloy material. The raw material corresponding to the aluminum zinc alloy material is calculated and prepared according to the weight percentage of each element in aluminum zinc alloy material composition.

The source or form of raw materials includes many kinds, such as the combination of elementary substances of all elements, or the combination of elementary substances of some elements and master alloys of some elements.

In the melting process of the raw materials, aluminum is usually added firstly to melt, and then the corresponding raw materials of other elements are added. The melting sequence of the elements has no specific requirements, as long as the elements in the melt are fully mixed and uniformly distributed. The forms and content of each element in the melt are the same as those in the aluminum zinc alloy material.

S200: AlTiB refiner is added into the melt and then is kept warm for 5 minutes. The addition quantity of the AlTiB refiner is 0.2% of the total weight of the melt.

The AlTiB refiner plays a key role in the production and processing of aluminum alloys. It can significantly increase nucleating particle numbers in liquid aluminum, and thus greatly increase numbers of effective heterogeneous nucleating cores. In this way, it has a good grain refinement effect on aluminum zinc alloy materials.

S300: A refining agent of 0.2% of the total weight of the melt is then added into the melt, and high purity argon gas is added for degassing refining. A degassing time is 10 minutes to 15 minutes.

The main components of the refining agent are NaCl and KCI. The main function of the refining agent is to remove impurities in the melt and to improve the purity and strength of the melt.

The main purpose of degassing refining is to reduce the gas dissolved in the melt to a possible lowest level, to avoid the formation of pores when the melt metal liquid solidifies, thereby to improve the quality and performance of the component.

Specifically, the degassing refining can be achieved by adding refining agent, passing gas that does not react with the melt, passing gas that can react with the melt, or using vacuum treatment. These methods can effectively remove hydrogen, oxygen and other harmful gases in the melt, reduce the formation of pores, and improve the density and mechanical properties of aluminum zinc alloy components.

Degassing refining is particularly important in the production and processing of aluminum alloys. Hydrogen in aluminum alloys is one of the main causes of porosity in castings, therefore it is necessary to remove the hydrogen by degassing refining. Common degassing refining methods include passing argon or nitrogen to form a hydrogen free bubble that absorbs and removes hydrogen and other impurities as it rises.

S400: The refined melt is cast at 690 °C to 700°C to obtain the aluminum zinc alloy component. Casting in this temperature range can not only ensure that the melt has good fluidity, but also reduce the formation of defects such as shrinkage and porosity.

Surface scum formed during the refining process is removed, and then the melt is stood for 20 minutes. After the melt temperature is lowered to 690°C to 700°C, the melt is cast into a mold to obtain the aluminum zinc alloy component.

In related technologies, aluminum-silicon alloys usually require T6 or T7 heat treatment to obtain relatively excellent mechanical properties to meet the requirements of the product. The heat treatment process has a large energy consumption, and is easy to form deformation and surface bubbles and other problems, resulting in the increase of scrap rate.

Without heat treatment, the yield strength, elongation and tensile strength of the aluminum zinc alloy for casting in this disclosure embodiment have reached or exceeded the corresponding parameters of the aluminum-silicon alloy after heat treatment. That is, aluminum zinc alloy for casting can omit the heat treatment process. In this case, energy is saved, and deformation and surface bubbles are not easy to form, and the yield is increased.

In some embodiments, the steps for melting the raw material corresponding to the aluminum zinc alloy material for casting described above include that:
The pure aluminum is melted and then heated to 740°C to 760°C to keep warm, and the pure silicon is added proportionately, and then kept warm for 10 minutes. The Al-20%Zn master alloy, Al-20%Fe master alloy, Al-10%Ni master alloy and Al-50%Cu master alloy are added into the melt proportionately, and then the melt is kept warm for 10 minutes to 20 minutes and stirred during keeping warm period to be uniformly distributed. The liquid metal is cooled to 710°C to 720°C after melting, then the pure magnesium is added to obtain a melt, and a surface of the melt is added with a covering agent.

In some embodiments, the steps also include that:
The components obtained by casting were treated by primary solution and secondary solution successively. Among them, the primary solution temperature is 380°Cto 440°C, and the primary solution time is 1 hour to 4 hours. The secondary solution temperature is 500°C to 540°C, and the secondary solution time is 4 hours to7 hours.

The component treated by the secondary solution treatment is transferred to the quenching medium for quenching treatment, in which the quenching medium is water, and the temperature of the quenching medium is 60°C to 80°C. The quenching transferring time is not more than 30 seconds, and the quenching time is 100 seconds to 150 seconds.

That is the component obtained by casting is heat treated, and the quenching treatment is carried out after two-stage solution treatment. The two-stage solution treatment method is to keep the components at a certain temperature below the non-equilibrium eutectic temperature for a certain time at first, and then to keep the temperature slowly raised to the non-equilibrium eutectic temperature, then the soluble residual phase is gradually dissolved. As a result, the over-burning temperature of the non-equilibrium eutectic can be raised.

According to the test results of DSC (differential scanning calorimetry), the temperature at which the non-equilibrium eutectic phase of the aluminum zinc alloy begins to melt is 478.8°C. In order to prevent over-burning during the solid solution treatment process, which will affect the microstructure and properties of the alloy, the two-stage solid solution treatment temperature is adopted according to the above temperature.

In related technologies, T6 or T7 heat treatment is generally necessary for aluminum-silicon alloys, and the heat treatment process is one-stage solid solution treatment.

Compared with the one-stage solid solution, the two-stage solid solution treatment in present disclosure improves the supersaturation of the solid solution without increasing the total alloying element content, which is conducive to the subsequent aging precipitation, thus improving the strength and fracture toughness of the alloy.

Specifically, in the quenching step, the component after secondary solution treatment is placed into the quenching medium water for cooling within a period of not more than 30 seconds after secondary solution treatment. Among them, the temperature of the water is 60°C to 80°C, and the standing time is 100 seconds to 150 seconds to ensure that the temperature of the component is basically consistent with that of the water.

The temperature of quenching medium water is 60°C to 80°C, and controlling the quenching medium temperature can significantly reduce the deformation of components caused by excessive temperature change. In addition, the standing time of quenching should ensure to be 100 seconds to 150 seconds, and the components should be transferred after complete cooling, so as to obtain more supersaturated solid solutions.

The aluminum zinc alloy component is obtained by an aging treatment after the quenching treatment.

In some embodiments, the steps for aging treating the quenched component include:
The quenched component is placed at 150°C to 180 °C for 2 hours to 6 hours.

In this step, the aging temperature is 150°C to 180 °C and the aging time is 2 hours to 6 hours.

The purpose of aging treatment is general to improve the hardness and strength of the component, and to reduce its plasticity, toughness and internal stress.

In some embodiments, the aluminum zinc alloy components obtained by the above preparation method without heat treatment have a tensile strength more than 270MPa, a yield strength more than 175MPa, and an elongation more than 11%.

In some embodiments, the aluminum zinc alloy components obtained by the above preparation method after heat treatment have a tensile strength more than 330MPa, a yield strength more than 270MPa, and an elongation more than 8%, most of which are further improved.

The present disclosure also provides an application of the above aluminum zinc alloy material for casting or the above aluminum zinc alloy component in the automobile chassis parts.

### Example 1

The present embodiment relates to an aluminum zinc alloy for casting and a preparation method thereof. The component content (weight percentage) of the aluminum zinc alloy including: Zn: 5.0%, Mg: 1.8%, Fe: 0.30%, Ni: 0.35%, Si: 0.20%, Cu: 0.12%, the total content of impurity elements does not exceed 0.10%, the balance of Al.

The preparation method of this embodiment comprises the following steps:
The required weight of each raw and auxiliary material is calculated according to the target alloy composition, and raw and auxiliary materials are heated and dehumidified in an insulation oven at a temperature of 150°C for more than 1 hour.

The pure aluminum is melted in a crucible furnace at first, and when the temperature of the liquid aluminum rises to 760°C, the pure Si is added proportionally, and then the melt is kept warm for 10 minutes. The Al-20%Zn, Al-20%Fe, Al-10%Ni and Al-50%Cu are added into the melt proportionately, and then the melt is kept warm for 10 minutes and is stirred during keeping warm period to be homogenized. After melting, the liquid metal is cooled to 710°C, and then pure magnesium is added to obtain a melt, and a covering agent is added on a surface of the melt. Sample the melt for composition analysis and adjust it to meet the requirements of composition.

AlTiB refiner is added for refining treatment, the addition quantity of the AlTiB refiner is 0.2% of the total weight of the melt. The melt is hold for 5 minutes, and a refining agent of 0.2% of the total weight of the melt is then added into the melt, and high purity argon gas is added for degassing refining. A degassing time is 10 minutes.

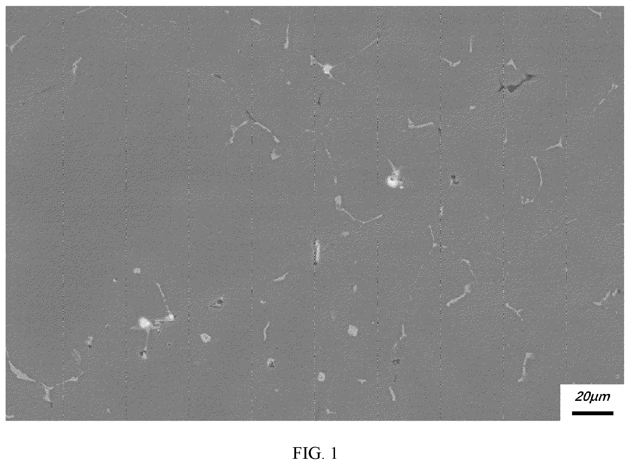

After degassing refining, the scum on the surface of the melt is removed, then the melt is stood for 20 minutes. After the melt temperature is lowered to 690°C to 700°C, the melt is cast into a mold. The metallographic diagram of the aluminum zinc alloy in this embodiment is shown in Figure 1.

### Example 2

The present embodiment relates to an aluminum zinc alloy for casting and a preparation method thereof. The component content (weight percentage) of the aluminum zinc alloy including: Zn: 5.5%, Mg: 2.0%, Fe: 0.35%, Ni: 0.42%, Si: 0.20%, Cu: 0.12%, the total content of impurity elements does not exceed 0.10%, the balance of Al.

The preparation method of this embodiment comprises the following steps:
The required weight of each raw and auxiliary material is calculated according to the target alloy composition, and raw and auxiliary materials are heated and dehumidified in an insulation oven at a temperature of 150°C for more than 1 hour.

The pure aluminum is melted in a crucible furnace at first, and when the temperature of the liquid aluminum rises to 760°C, the pure Si is added proportionally, and then the melt is kept warm for 10 minutes. The Al-20%Zn, Al-20%Fe, Al-10%Ni and Al-50%Cu are added into the melt proportionately, and then the melt is kept warm for 10 minutes and is stirred during keeping warm period to be homogenized. After melting, the liquid metal is cooled to 710°C, and then pure magnesium is added to obtain a melt, and a covering agent is added on a surface of the melt. Sample the melt for composition analysis and adjust it to meet the requirements of composition.

AlTiB refiner is added for refining treatment, the addition quantity of the AlTiB refiner is 0.2% of the total weight of the melt. The melt is hold for 5 minutes, and a refining agent of 0.2% of the total weight of the melt is then added into the melt, and high purity argon gas is added for degassing refining. A degassing time is 10 minutes.

After degassing refining, the scum on the surface of the melt is removed, then the melt is stood for 20 minutes. After the melt temperature is lowered to 690 °C to 700°C, the melt is cast into a mold.

### Example 3

The present embodiment relates to an aluminum zinc alloy for casting and a preparation method thereof. The component content (weight percentage) of the aluminum zinc alloy is: Zn: 6.0%, Mg: 2.2%, Fe: 0.40%, Ni: 0.50%, Si: 0.20%, Cu: 0.12%, the total content of impurity elements does not exceed 0.10%, the balance of Al.

The preparation method of this embodiment comprises the following steps:
The required weight of each raw and auxiliary material is calculated according to the target alloy composition, and raw and auxiliary materials is heated and dehumidified in an insulation oven at a temperature of 150°C for more than 1 hour.

The pure aluminum is melted in a crucible furnace at first, and when the temperature of the liquid aluminum rises to 760°C, the pure Si is added proportionally, and then the melt is kept warm for 10 minutes. The Al-20%Zn, Al-20%Fe, Al-10%Ni and Al-50%Cu are added into the melt proportionately, and then the melt is kept warm for 10 minutes and is stirred during keeping warm period to be homogenized. After melting, the liquid metal is cooled to 710°C, and then pure magnesium is added to obtain a melt, and a covering agent is added on a surface of the melt. Sample the melt for composition analysis and adjust it to meet the requirements.

AlTiB refiner is added for refining treatment, the addition quantity of the AlTiB refiner is 0.2% of the total weight of the melt. The melt is hold for 5 minutes, and a refining agent of 0.2% of the total weight of the melt is then added into the melt, and high purity argon gas is added for degassing refining. A degassing time is 10 minutes.

After degassing refining, the scum on the surface of the melt is removed, then the melt is stood for 20 minutes. After the melt temperature is lowered to 690°C to 700°C, the melt is cast into a mold.

### Example 4

The present embodiment relates to an aluminum zinc alloy for casting and a preparation method thereof. The component content (weight percentage) of the aluminum zinc alloy is: Zn: 5.0%, Mg: 1.8%, Fe: 0.20%, Ni: 0.25%, Si: 0.20%, Cu: 0.12%, the total content of impurity elements does not exceed 0.10%, the balance of Al.

The preparation method of this embodiment comprises the following steps:
The required weight of each raw and auxiliary material is calculated according to the target alloy composition, and raw and auxiliary materials are heated and dehumidified in an insulation oven at a temperature of 150°C for more than 1 hour.

The pure aluminum is melted in a crucible furnace at first, and when the temperature of the liquid aluminum rises to 760°C, the pure Si is added proportionally, and then the melt is kept warm for 10 minutes. The Al-20%Zn, Al-20%Fe, Al-10%Ni and Al-50%Cu are added into the melt proportionately, and then the melt is kept warm for 10 minutes and is stirred during keeping warm period to be homogenized. After melting, the liquid metal is cooled to 710°C, and then pure magnesium is added to obtain a melt, and a covering agent is added on a surface of the melt. Sample the melt for composition analysis and adjust it to meet the requirements of composition.

AlTiB refiner is added for refining treatment, the addition quantity of the AlTiB refiner is 0.2% of the total weight of the melt. The melt is hold for 5 minutes, and a refining agent of 0.2% of the total weight of the melt is then added into the melt, and high purity argon gas is added for degassing refining. A degassing time is 10 minutes.

After degassing refining, the scum on the surface of the melt is removed, then the melt is stood for 20 minutes. After the melt temperature is lowered to 690°C to 700°C, the melt is cast into a mold.

In particular, the embodiment further improves the strength of the alloy by heat treatment. The specific process is as follows:
Two-stage solution treatment: the primary solution temperature is 400°C, the solution time is 2 hours; the secondary solution temperature is 520°C, the solution time is 5 hours.

Quenching treatment: quenching medium-water, the quenching temperature is 70°C, the quenching transferring time is not more than 30 seconds, the quenching time is 130 seconds.

Aging treatment: the aging temperature is 160°C, the aging time is 3 hours.

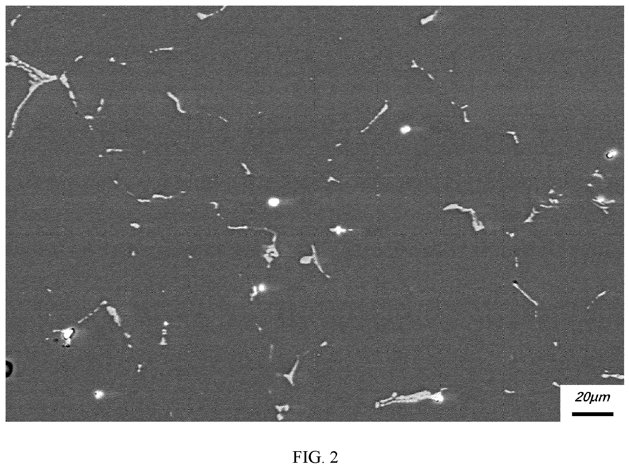

The metallographic diagram of the aluminum zinc alloy in this embodiment is shown in Figure 2.

### Example 5

The present embodiment relates to an aluminum zinc alloy for casting and a preparation method thereof. The component content (weight percentage) of the aluminum zinc alloy including: Zn: 5.5%, Mg: 2.0%, Fe: 0.25%, Ni: 0.30%, Si: 0.20%, Cu: 0.12%, the total content of impurity elements does not exceed 0.10%, the balance of Al.

The preparation method of this embodiment comprises the following steps:
The required weight of each raw and auxiliary material is calculated according to the target alloy composition, and raw and auxiliary materials is heated and dehumidified in an insulation oven at a temperature of 150°C for more than 1 hour.

The pure aluminum is melted in a crucible furnace at first, and when the temperature of the liquid aluminum rises to 760°C, the pure Si is added proportionally, and then the melt is kept warm for 10 minutes. The Al-20%Zn, Al-20%Fe, Al-10%Ni and Al-50%Cu are added into the melt proportionately, and then the melt is kept warm for 10 minutes and is stirred during keeping warm period to be homogenized. After melting, the liquid metal is cooled to 710°C, and then pure magnesium is added to obtain a melt, and a covering agent is added on a surface of the melt. Sample the melt for composition analysis and adjust it to meet the requirements of composition.

AlTiB refiner is added for refining treatment, the addition quantity of the AlTiB refiner is 0.2% of the total weight of the melt. The melt is hold for 5 minutes, and a refining agent of 0.2% of the total weight of the melt is then added into the melt, and high purity argon gas is added for degassing refining. A degassing time is 10 minutes.

After degassing refining, the scum on the surface of the melt is removed, then the melt is stood for 20 minutes. After the melt temperature is lowered to 690°C to 700°C, the melt is cast into a mold.

In particular, the strength of the alloy is further improved by heat treatment in present embodiment. The specific process is as follows:
Two-stage solution treatment: the primary solution temperature is 400°C, the solution time is 3 hours; the secondary solution temperature is 520°C, the solution time is 6 hours;
Quenching treatment: quenching medium is water, the quenching temperature is 70°C, the quenching transferring time is not more than 30 seconds, the quenching time is 130 seconds;
Aging treatment: the aging temperature is 150°C, the aging time is 4 hours.

### Example 6

The present embodiment relates to an aluminum zinc alloy for casting and a preparation method thereof. The component content (weight percentage) of the aluminum zinc alloy including: Zn: 6.0%, Mg: 2.2%, Fe: 0.30%, Ni: 0.35%, Si: 0.20%, Cu: 0.12%, the total content of impurity elements does not exceed 0.10%, the balance of Al.

The preparation method of this embodiment comprises the following steps:
The required weight of each raw and auxiliary material is calculated according to the target alloy composition, and raw and auxiliary materials is heated and dehumidified in an insulation oven at a temperature of 150°C for more than 1 hour.

The pure aluminum is melted in a crucible furnace at first, and when the temperature of the liquid aluminum rises to 760°C, the pure Si is added proportionally, and then the melt is kept warm for 10 minutes. The Al-20%Zn, Al-20%Fe, Al-10%Ni and Al-50%Cu are added into the melt proportionately, and then the melt is kept warm for 10 minutes and is stirred during keeping warm period to be homogenized. After melting, the liquid metal is cooled to 710°C, and then pure magnesium is added to obtain a melt, and a covering agent is added on a surface of the melt. Sample the melt for composition analysis and adjust it to meet the requirements of composition.

AlTiB refiner is added for refining treatment, the addition quantity of the AlTiB refiner is 0.2% of the total weight of the melt. The melt is hold for 5 minutes, and a refining agent of 0.2% of the total weight of the melt is then added into the melt, and high purity argon gas is added for degassing refining. A degassing time is 10 minutes.

After degassing refining, the scum on the surface of the melt is removed, then the melt is stood for 20 minutes. After the melt temperature is lowered to 690°C to 700°C, the melt is cast into a mold.

In particular, the strength of the alloy is further improved by heat treatment in present embodiment. The specific process is as follows:
Two-stage solution treatment: the primary solution temperature is 400°C, the solution time is 4 hours; the secondary solution temperature is 520°C, the solution time is 7 hours;
Quenching treatment: quenching medium-water, the quenching temperature is 70°C, the quenching transferring time is not more than 30 seconds, the quenching time is 130 seconds;
Aging treatment: the aging temperature is 150°C, the aging time is 5 hours.

### Comparative example 1

The present embodiment relates to an aluminum-silicon alloy for casting (A356.2 alloy), the content of each component (weight percentage) of the aluminum-silicon alloy including: Si: 7.0%, Mg: 0.30%, Ti: 0.15%, Sr: 0.20%, Fe≦0.15%, the total content of impurity elements does not exceed 0.10%, the balance of Al.

The preparation method of this embodiment comprises the following steps:
The required weight of each raw and auxiliary material is calculated according to the target alloy composition, and raw and auxiliary materials is heated and dehumidified in an insulation oven at a temperature of 150°C for more than 1 hour.

The pure aluminum is melted in a crucible furnace at first, and when the temperature of the liquid aluminum rises to 740°C, the pure Si is added proportionally, and then the melt is kept warm for 30 minutes. The Al-10%Ti master alloy and the Al-10%Sr master alloy are added into the melt proportionately, and then the melt is kept warm for 10 minutes and is stirred during keeping warm period to be homogenized. After melting, the liquid metal is cooled to 710°C, and then pure magnesium is added to obtain a melt, and a covering agent is added on a surface of the melt. Sample the melt for composition analysis and adjust it to meet the requirements of composition.

AlTiB refiner is added for refining treatment, the addition quantity of the AlTiB refiner is 0.2% of the total weight of the melt. The melt is hold for 5 minutes, and a refining agent of 0.2% of the total weight of the melt is then added into the melt, and high purity argon gas is added for degassing refining. A degassing time is 10 minutes.

After degassing refining, the scum on the surface of the melt is removed, then the melt is stood for 20 minutes. After the melt temperature is lowered to 690°C to 700°C, the melt is cast into a mold.

In particular, the embodiment further improves the strength of the alloy by heat treatment. The specific process is as follows:
Solution treatment: the solution temperature is 520°C, the solution time is 7 hours;
Quenching treatment: quenching medium-water, the quenching temperature is 70°C, the quenching transferring time is not more than 30 seconds, the quenching time is 130 seconds;
Aging treatment: the aging temperature is 150°C, the aging time is 5 hours.

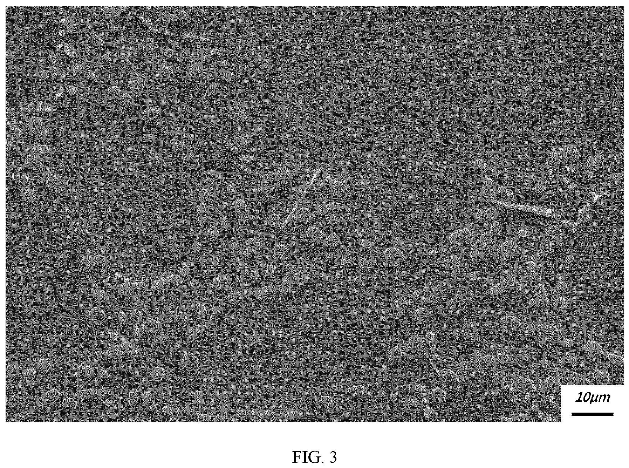

The metallographic diagram of the aluminum-silicon alloy in this comparative embodiment is shown in Figure 3.

In order to more clearly represent the proportion of each element, the proportion of each element in the examples and the comparative example are summarized as follows:

| | Zn | Mg | Fe | Ni | Si | Cu | Ti | Sr | Al | Tensile strengt h /MPa | Yield strengt h /MPa | Elonga tion /% |
|---|---|---|---|---|---|---|---|---|---|---|---|---|
| Exam ple 1 | 5. 0 % | 1.8 % | 0.30 % | 0.3 5% | 0.2 0% | 0.1 2% | - | - | bala nce | 272 | 175 | 13.1 |
| Exam ple 2 | 5. 5 % | 2.0 % | 0.35 % | 0.4 2% | 0.2 0% | 0.1 2% | - | - | bala nce | 285 | 182 | 12.0 |
| Exam ple 3 | 6. 0 % | 2.2 % | 0.40 % | 0.5 0% | 0.2 0% | 0.1 2% | - | - | bala nce | 297 | 189 | 11.1 |
| Exam ple 4 | 5. 0 % | 1.8 % | 0.20 % | 0.2 5% | 0.2 0% | 0.1 2% | - | - | bala nce | 332 | 275 | 9.1 |
| Exam ple 5 | 5. 5 % | 2.0 % | 0.25 % | 0.3 0% | 0.2 0% | 0.1 2% | | | bala nce | 335 | 283 | 8.7 |
| Exam ple6 | 6. 0 % | 2.2 % | 0.30 % | 0.3 5% | 0.2 0% | 0.1 2% | | | bala nce | 340 | 290 | 8.1 |
| Comp arative examp le 1 | - | 0.3 0% | ≦0.1 5% | - | 7.0 % | - | 0.1 5% | 0.2 0% | bala nce | 243 | 173 | 7.9 |

As shown in the table above, the tensile strength, the yield strength and the elongation of the aluminum zinc alloy for casting without heat treatment in example 1 to 3 is superior to the corresponding parameters of the aluminum-silicon alloy for casting in comparative example 1. In addition, the tensile strength and the elongation of the aluminum zinc alloy for casting without heat treatment in examples 1 to 3 is significantly superior to the corresponding parameters of the aluminum-silicon alloy for casting in comparative example 1.

As a whole, the yield strength and the tensile strength of the aluminum zinc alloys for casting in examples 4~6 are further improved after heat treatment, while the elongation decreases. The tensile strength and the yield strength of the aluminum zinc alloy for casting is significantly superior to the corresponding parameters of the aluminum-silicon alloy for casting in comparative example 1. The elongation of the aluminum zinc alloy for casting is superior to the elongation of the aluminum-silicon alloy for casting in comparative example 1.

As shown in Figures 1 and 2, FIG. 1 is the SEM topography of the aluminum zinc alloy described in example 1 of the present disclosure, and FIG. 2 is the SEM topography of the aluminum zinc alloy described in example 4 of the present disclosure. It can be seen that the aluminum zinc alloy is mainly composed of α -Al matrix, MgZn2 phase and AlFe9Ni eutectic phase. In the as-cast state, MgZn2 phase is irregular polygon and AlFe9Ni eutectic phase is rod-like. After heat treatment, MgZn2 phase exhibits a tendency to spheroidize, and AlFe9Ni eutectic phase changes into short rod-like. Therefore, after heat treatment, the yield strength and tensile strength of the product are further improved, and the elongation is reduced.

As shown in Figure 3, FIG. 3 is the SEM topography of the aluminum-silicon alloy described in comparative example 1 of the present disclosure. The aluminum-silicon alloy is mainly composed of α -Al matrix and spherical Al-Si eutectic phase, with a small amount of acicular AlFeSi brittle phase.

In the above technical scheme of the disclosure, the above is only the optimal embodiment of the invention, and does not therefore limit the scope of the patent of the invention. Under the technical idea of the disclosure, the equivalent structure transformation made by using the contents of the specification and drawings of the disclosure, or the direct/indirect application in other related technical fields are included in the scope of patent protection of the disclosure.

## Claims

1. An aluminum zinc alloy material for casting, by percentage of weight, comprising :
Zn: 5.0% ~ 7.0%, Mg: 1.0% ~ 3.0%, Fe: 0.20% - 0.40%, Ni: 0.25% ~ 0.50%, Si: 0.10% ~ 0.30%, Cu: 0.05% ~ 0.15%, the balance of Al, where the weight ratio of Zn element to Mg element is more than 2.3.

2. The aluminum zinc alloy materials for casting of claim 1, by percentage of weight, comprising:
Zn: 5.0% ~ 6.0%, Mg: 1.8% ~ 2.2%, Fe: 0.30% ~ 0.40%, Ni: 0.35% ~ 0.50%, Si: 0.10% ~ 0.30%, Cu: 0.10% ~ 0.15%, the balance of Al.

3. The aluminum zinc alloy materials for casting of claim 1, by percentage of weight, comprising:
Zn: 5.0% ~ 6.0%, Mg: 1.8% ~ 2.2%, Fe: 0.20% ~ 0.30%, Ni: 0.25% ~ 0.35%, Si: 0.10% ~ 0.30%, Cu: 0.10% ~ 0.15%, the balance of Al.

4. The aluminum zinc alloy materials for casting of any one of claim 1 to 3, wherein the weight ratio of Ni element to Fe element is between 1 and 1.5.

5. The aluminum zinc alloy materials for casting of any one of claim 1 to 3, wherein the microstructure of the aluminum zinc alloy material for casting is mainly composed of α-Al matrix, MgZn₂ phase and AlFe₉Ni eutectic phase; the aluminum zinc alloy material for casting has a tensile strength more than 270MPa, a yield strength more than 175MPa, and an elongation more than 11%.

6. A preparation method for an aluminum zinc alloy component, comprising:
melting the raw material corresponding to the aluminum zinc alloy material for casting in any one of claim 1 to 5 to obtain melt;
adding AlTiB refiner into the melt and keeping warm for 5 minutes; the addition quantity of the AlTiB refiner being 0.2% of the total weight of the melt;
adding a refining agent of 0.2% of the total weight of the melt into the melt, and adding purity argon gas for degassing refining; a degassing time being 10 minutes to 15 minutes;
casting refined melt at 690°C to 700°C to obtain the aluminum zinc alloy component.

7. The preparation method of claim 6, wherein the step "melting the raw material corresponding to the aluminum zinc alloy material for casting in any one of claim 1 to 5 to obtain melt" comprises:
melting pure aluminum and heating the pure aluminum to 740°C to 760°C to keep warm;
adding pure silicon in proportion and keeping warm for 10 minutes;
adding Al-20%Zn, Al-20%Fe, Al-10%Ni and Al-50%Cu in proportion and keeping warm for 10 minutes to 20 minutes; stirring during keeping warm period;
cooling liquid metal to 710°C to 720 °C after the raw material being melted;
adding pure magnesium to obtain a melt; and
adding a covering agent on a surface of the melt.

8. The preparation method of claim 6, further comprising:
solution treating the component obtained by casting with primary solution and secondary solution successively; a primary solution temperature being 380°C to 440°C and a primary solution time being 1 hours to 4 hours; a secondary solution temperature being 500°C to 540°C and a secondary solution time being 4 hours to 7 hours;
quenching treating the component after the secondary solution treatment in the quenching medium; a quenching medium being water, a temperature of the quenching medium being 60°C to 80°C; a quenching transferring time being not more than 30 seconds, and a quenching time being 100 seconds to 150 seconds;
aging treating the quenched component, to obtain the aluminum zinc alloy component.

9. The preparation method of claim 6, wherein the step "aging treating the quenched component" comprises:
placing the quenched component at 150°C to 180 °C for 2 hours to 6 hours.

10. Application of the aluminum zinc alloy material for casting of any one of claims 1 to 5 or the aluminum zinc alloy component prepared in any one of claims 6 to 9 on an automobile chassis part.
